# EUROPÄISCHE PATENTANMELDUNG

(11) **EP 0 945 722 A2**
(43) Veröffentlichungstag der Anmeldung: **29.09.1999**
(21) Anmeldenummer: 99106334.8
(22) Anmeldetag: 26.03.1999
(51) Int. Cl.: G01N 27/12

(54) **Halbleitergassensor**

(30) Priorität: 26.03.1998 DE 19813529
(71) Anmelder: SIEMENS AKTIENGESELLSCHAFT, 80333 München (DE)
(72) Erfinder: Fleischer, Maximilian, 85635 Höhenkirchen (DE); Frank, Joachim, 85521 Ottobrunn (DE); Meixner, Hans, 85540 Haar (DE)

(57) **Zusammenfassung**

Bei einem Halbleitergassensor mit einem Trägersubstrat (56) sind auf derselben Seite des Trägersubstrats platzsparend zwei als Leiterbahnbereiche ausgebildete Interdigitalelektrodenbereiche (ID1, ID2) mit jeweils zwei Interdigitalelektroden (4, 7; 5, 9) vorgesehen. Weiterhin sind als Teil eines auf derselben Seite des Trägersubstrats (56) zwei Meßwiderstandsbereiche (57, 58) vorgesehen, wobei die Meßwiderstandsbereiche (57, 58) und die Interdigitalelektrodenbereiche (ID1, ID2) zu einer auf dem Trägersubstrat gebildeten Wheatstone-Brückenmeßschaltung verbunden sind.

## Beschreibung

Die Erfindung betrifft einen Halbleitergassensor sowie eine Meßschaltung mit einem Halbleitergassensor.

Gattungsgemäße Halbleitergassensoren weisen ein keramisches Trägersubstrat auf. Auf einer Seite des Trägersubstrats ist ein als Leiterbahnbereich ausgebildeter Interdigitalelektrodenbereich mit Interdigitalelektroden und gassensitiver halbleitender Schicht vorgesehen. Auf der gegenüberliegenden Seite des Trägersubstrats ist ein als Leiterbahnbereich ausgebildeter Heizwiderstandsbereich vorgesehen. An dem Heizwiderstandsbereich, der als mäanderförmige Leiterbahn ausgeführt sein kann, wird eine Heizspannung angelegt, so daß durch den Heizwiderstandsbereich ein Heizstrom fließt. Dadurch wird das Trägersubstrat auf eine vorbestimmte Temperatur aufgeheizt. Um das Trägersubstrat und damit die auf der anderen Seite des Trägersubstrats angeordneten Interdigitalelektroden auf einer konstanten Temperatur zu halten, ist in einer externen Schaltung eine Heizungsregelung vorgesehen, die üblicherweise mit einem PI-Regler versehen ist. Es sind auch selbstadaptierende Regelungen bekannt.

Zusätzlich zur Beheizung des Halbleitergassensors mit einer Heizungsschaltung ist eine Schaltung zur Messung des Widerstandes des Interdigitalelektrodenbereichs vorgesehen. Da sich der Widerstand des Interdigitalelektrodenbereichs beim Detektieren eines Gases ändert, wird die Ausleseschaltung als typische Widerstandsmeßschaltung ausgestaltet. Hierfür ist es bekannt, den Interdigitalelektrodenbereich als veränderlichen Widerstand einer Wheatstone-Brückenschaltung vorzusehen.

Bei den bekannten Halbleitergassensoren ist von Nachteil, daß die externe Beschaltung zum Bereitstellen einer Heizspannung und zum Erfassen von Änderungen des Widerstands des Interdigitalelektrodenbereichs sehr aufwendig und kompliziert ausfallen.

Es ist somit Aufgabe der Erfindung, einen Halbleitergassensor bereitzustellen, der mit einem geringen externen Schaltungsaufwand betrieben werden kann. Es ist weiterhin Aufgabe der Erfindung, eine einfache und kompakte Auswertungsschaltung anzugeben.

Diese Aufgabe wird durch die Gegenstände der unabhängigen Ansprüche gelöst. Vorteilhafte Weiterbildungen ergeben sich aus den jeweiligen Unteransprüchen.

Gemäß der Erfindung ist wenigstens ein als Leiterbahnbereich ausgebildeter Meßwiderstandsbereich vorgesehen, der mit dem Interdigitalelektrodenbereich in Verbindung steht. Bei dieser Ausgestaltung werden Teile der zum Auswerten des Widerstands des Interdigitalelektrodenbereichs notwendigen Meßschaltung mit auf den Halbleitergassensor integriert, wodurch sich eine vereinfachte Auswertungsschaltung erzielen läßt. Bei dieser Ausgestaltung brauchen nämlich externe Referenz-Widerstände, wie sie zum Ausbilden beispielsweise einer Wheatstone-Brückenschaltung notwendig sind, nicht separat vorgesehen werden, sondern diese können bereits bei der Fertigung des Halbleitergassensors auf diesem bereitgestellt werden.

Gemäß der Erfindung können auch mehrere Meßwiderstandsbereiche vorgesehen sein, die mit dem Interdigitalelektrodenbereich zu einer Brückenmeßschaltung verbunden sind. Auf diese Weise kann eine vollständige Brückenmeßschaltung auf dem Trägersubstrat bereitgestellt werden, die vorteilhafterweise nur noch mit einer Stromversorgung beaufschlagt werden muß, um den aktuellen Widerstand des Interdigitalelektrodenbereichs auszugeben.

Die Erfindung ist nicht auf Halbleitergassensoren beschränkt, die lediglich einen einzigen Interdigitalelektrodenbereich aufweisen. Vorteilhafterweise können auch mehrere Interdigitalelektrodenbereiche vorgesehen sein, wobei sich besonders bewährt hat, mehrere Interdigitalelektrodenbereiche vorzusehen, die so geschaltet sind, daß sie sich gegenseitig hinsichtlich von Temperaturschwankungen kompensieren.

In einer besonderen Ausbildung des erfindungsgemäßen Halbleitergassensors sind drei Meßwiderstandsbereiche und ein Interdigitalelektrodenbereich bzw. zwei Meßwiderstände und zwei insbesondere einander kompensierende Interdigitalelektrodenbereiche vorgesehen. Die Meßwiderstandsbereiche und der Interdigitalelektrodenbereich bzw. zwei Meßwiderstandsbereiche und die beiden Interdigitalelektrodenbereiche sind beispielsweise zu einer Wheatstone-Brückenmeßschaltung verbunden, wobei ein erster und ein zweiter Meßwiderstandsbereich einen Zweig der Wheatstone-Brückenmeßschaltung bilden. Je nach Ausgestaltung mit einem oder mit zwei Interdigitalelektrodenbereichen bilden ein dritter Meßwiderstandsbereich und der Interdigitalelektrodenbereich bzw. die beiden Interdigitalelektrodenbereiche den zweiten Zweig der Wheatstone-Brückenmeßschaltung. Auf diese Weise ergibt sich ein besonders einfach auszuwertender Halbleitergassensor, bei dem der Aufwand für die Elektronik zur Sensoransteuerung deutlich verringert ist. Die Beschaltung reduziert sich auf die Bereitstellung einer Spannungsquelle, aus der die zum Betrieb des Halbleitergassensors benötigte Hilfsenergie entnommen werden kann.

Eine vorteilhafte Weiterbildung läßt sich dann erreichen, wenn wenigstens ein Meßwiderstandsbereich als Heizwiderstandsbereich ausgebildet ist. Dadurch läßt sich nämlich ein besonders kompakter Halbleitergassensor bereitstellen, der zum Betrieb nur noch eine einzige Spannungsquelle benötigt. Aus dieser einen Spannungsquelle wird sowohl die Energie zum Betrieb der Interdigitalelektroden entnommen als auch diejenige Energie, die zum Halten des Halbleitergassensors auf einer erhöhten Temperatur benötigt wird. Dadurch vermindert sich der Schaltungsaufwand zum Betrieb des erfindungsgemäßen Halbleitergassensors gegenüber den bekannten Lösungen beträchtlich.

Weiterhin können gemäß der Erfindung auf dem Trägersubstrat auch Meßwiderstände vorgesehen sein, die in Reihe mit dem Interdigitalelektrodenbereich bzw. parallel zu dem Interdigitalelektrodenbereich geschaltet sind. Mit solchen Meßwiderständen ist gewährleistet, daß sich der Widerstand des Interdigitalelektrodenbereichs bei abrupten Veränderungen von Gaskonzentrationen in der Nähe des Interdigitalelektrodenbereichs innerhalb eines vorgegebenen Rahmens bewegt. So bewirkt ein in Reihe mit dem Interdigitalelektrodenbereich geschalteter Meßwiderstand, daß der Gesamtwiderstand des Halbleitergassensors einen gewissen Wert nicht unterschreitet. Der parallel zu dem Interdigitalelektrodenbereich geschaltete Meßwiderstand bewirkt, daß der Gesamtwiderstand des Halbleitergassensors einen bestimmten Wert nicht überschreitet.

In Abwandlung zu den vorstehenden Ausgestaltungen der Erfindung bzw. in Weiterbildung derselben ist auf dem Trägersubstrat des erfindungsgemäßen Halbleitergassensors wenigstens ein als Leiterbahnbereich ausgebildeter Interdigitalelektrodenbereich mit zwei Interdigitalelektroden und wenigstens zwei jeweils als Leiterbahnbereiche ausgebildete und in Reihe geschaltete Heizwiderstandsbereiche versehen. Dabei sind die Leiterbahnen der beiden Heizwiderstandsbereiche an einem Verbindungspunkt miteinander verbunden und der Interdigitalelektrodenbereich steht über einem im Bereich des Trägersubstrats vorgesehenen Leiterbahnabschnitt und/oder durch eine Durchkontaktierung durch das Trägersubstrat hindurch mit einem Verbindungspunkt von je zwei Heizwiderstandsbereichen in Verbindung.

Bei dieser Ausbildung ist gewährleistet, daß der Interdigitalelektrodenbereich mit der Heizspannung betrieben werden kann. Die beiden hintereinander geschalteten Heizwiderstandsbereiche bilden nämlich einen Spannungsteiler, bei dem vorzugsweise ein Großteil der Heizspannung an einem ersten Heizwiderstandsbereich abfällt, so daß der zweite Heizwiderstandsbereich und der Interdigitalelektrodenbereich, die zueinander parallel geschaltet sind, mit der selben geringen Spannung betrieben werden. Dadurch ist gewährleistet, daß sich am Interdigitalelektrodenbereich keine Polarisationserscheinungen aufgrund einer zu hohen Betriebsspannung ergeben.

Dabei ist in einer besonderen Ausführungsform vorgesehen, daß zwei jeweils als Leiterbahnbereiche ausgebildete Interdigitalelektrodenbereiche mit zwei Interdigitalelektroden und vier jeweils als Leiterbahnbereiche ausgebildete und in Reihe geschaltete Heizwiderstandsbereiche vorgesehen sind. Je ein Interdigitalelektrodenbereich ist durch einen im Bereich des Trägersubstrats vorgesehenen Leiterbahnabschnitt und/oder durch eine Durchkontaktierung mit einem Verbindungspunkt von je zwei Heizwiderstandsbereichen verbunden. Dadurch lassen sich zwei Interdigitalelektrodenbereiche auf ein und demselben Trägersubstrat anordnen, wobei deren Versorgung mit Energie aus der Heizspannung auf einfachste Weise gewährleistet ist. Gemäß der Erfindung können die beiden Interdigitalelektrodenbereiche auch so ausgebildet sein, daß deren Widerstandsänderungen einander hinsichtlich von Temperaturschwankungen kompensieren. Es ist auch möglich, die beiden Interdigitalelektrodenbereiche so auszubilden, daß diese auf unterschiedliche Gase reagieren. Damit kann falschen Meßergebnissen aufgrund von Sättigung der empfindlichen Bereiche der Interdigitalelektrodenbereiche entgegengewirkt werden.

Die Erfindung ist auch in einer Meßschaltung verwirklicht, in der der erfindungsgemäße Gassensor eingesetzt ist.

Die Erfindung kann für sämtliche Anwendungen der Gassensorik eingesetzt werden, bei denen ein Interesse besteht, den Schaltungsaufwand zu minimieren. Insbesondere liegen Einsatzmöglichkeiten in der Domotik in der Luftüberwachung. Hier besteht hohes Interesse an Schwellwertsensoren zum Beispiel für explosive Gase (Erd-, Flüssiggas), toxische Gase (CO in Garagen, CO-Überwachung bei Feuerungsanlagen) sowie in Sensoren, die die Qualität von Luft feststellen (Total Volatile Organic Components-TVOC-Sensor für die Raumluftüberwachung zur Belüftungs- und Klimasteuerung) bei strengen Restriktionen der Systemkosten. Neben den Schwellwertsensoren ist die genannte Erfindung auch für sämtliche regelnden Sensoren (Regelung von Klein- und Großfeuerungsanlagen) zu verwenden.

Die Erfindung beruht auf dem Grundgedanken, daß sich Kostenvorteile und eine Vereinfachung des Aufbaus der bekannten Meßschaltungen durch eine günstige Anordnung und Verschaltung der funktionalen Element erreicht wird. Dabei wird die Verschaltung der Meßschaltung nicht in Form einer externen Elektronik diskret aufgebaut, sondern die Schaltungselemente werden im Zuge der ohnehin für die Chipherstellung benötigten photolithographischen Prozesse ON-CHIP mit realisiert. Der erfindungsgemäße Gassensor wird dadurch zu einem aktiven Bauteil, das einem Anwender ein direkt nutzbares Ausgangssignal liefern kann, sofern die Energie zum Betrieb des Gassensors bereitgestellt wird.

Durch den besonderen Aufbau des erfindungsgemäßen Gassensors werden potentielle Drifterscheinungen im Langzeitbetrieb wie beispielsweise Grundwiderstandsveränderungen der Sensorschicht aufgrund einer Alterung der Heizstruktur automatisch eliminiert. Außerdem werden Schwankungen der Eigenschaften des Gassensors aufgrund unerwünschter Schwankungen der Herstellungsparameter eliminiert. Gerade bei der Verknüpfung der Temperaturkompensation mit einer ON-CHIP-Verschaltung der benötigten Elemente kann ein Spannungsteiler der Temperaturkompensation mit der Heizspannung versorgt werden. Es gibt drei Sensoranschlüsse, wobei zwei Anschlüsse zur Versorgung des Sensors mit Hilfsenergie wie beispielsweise der Heizungsspannung dient, und wobei der dritte Anschluß zum Abtasten des Meßwertes des erfindungsgemäßen Gassensors dient. Der dritte Anschluß dient also als aktiver Sensorausgang, dem direkt eine Spannung entnommen werden kann.

Die Erfindung ist in der Zeichnung anhand mehrerer Ausführungsbeispiele veranschaulicht.
- Figur 1: zeigt eine Draufsicht auf einen ersten erfindungsgemäßen Gassensor,
- Figur 2: zeigt ein Ersatzschaltbild einer ersten erfindungsgemäßen Meßschaltung, die den Gassensor aus Figur 1 beinhaltet,
- Figur 3: zeigt eine Draufsicht auf einen zweiten erfindungsgemäßen Gassensor,
- Figur 4: zeigt eine Ansicht des Gassensors aus Figur 3 in der Ansicht von unten,
- Figur 5: zeigt eine Draufsicht auf einen dritten erfindungsgemäßen Gassensor,
- Figur 6: zeigt ein Ersatzschaltbild einer zweiten erfindungsgemäßen Meßschaltung, die den Gassensor aus Figur 5 beinhaltet,
- Figur 7: zeigt eine Draufsicht auf einen weiteren erfindungsgemäßen Gassensors,
- Figur 8: zeigt eine Ansicht des erfindungsgemäßen Gassensors aus Figur 7 von unten,
- Figur 9: zeigt ein Ersatzschaltbild einer dritten erfindungsgemäßen Meßschaltung, die den Gassensor aus Figur 8 beinhaltet,
- Figur 10: zeigt eine Draufsicht auf einen weiteren erfindungsgemäßen Gassensor,
- Figur 11: zeigt ein Ersatzschaltbild einer vierten erfindungsgemäßen Meßschaltung, die den Gassensor aus Figur 10 beinhaltet,
- Figur 12: zeigt eine Draufsicht auf einen weiteren erfindungsgemäßen Gassensor,
- Figur 13: zeigt eine Ansicht des erfindungsgemäßen Gassensors aus Figur 12 von unten,
- Figur 14: zeigt eine Ansicht eines weiteren erfindungsgemäßen Gassensors und
- Figur 15: zeigt ein Ersatzschaltbild einer fünften erfindungsgemäßen Meßschaltung, die den Gassensor aus Figur 14 beinhaltet.

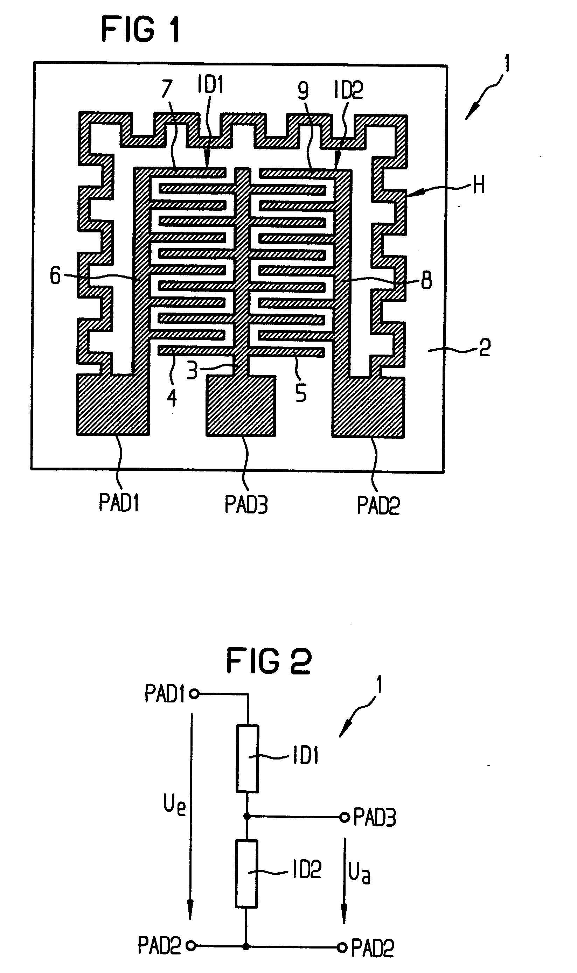

Figur 1 zeigt eine Draufsicht auf einen ersten Gassensor 1. Der erste Gassensor 1 weist ein quaderförmiges Trägersubstrat 2 aus Keramik mit in der Draufsicht quadratischen Umriß auf.

Auf dem Trägersubstrat 2 sind mittels einer Dünnschicht- oder einer Dickschicht-Technik Leiterbahnstrukturen aus Platin aufgebracht, die in Figur 1 mit vollen Linien widergegeben sind.

Dabei sind im Bereich einer unteren Kante des Trägersubstrats 2 quadratische Anschlußkontakte PAD1, PAD2 und PAD3 vorgesehen. Von den Anschlußkontakten PAD1, PAD2 und PAD3 aus erstrecken sich ein erster Interdigitalelektrodenbereich ID1 bzw. ein zweiter Interdigitalelektrodenbereich ID2 zur oberen Kante des Trägersubstrats 2 hin. Die Interdigitalelektrodenbereiche ID1 und ID2 weisen einen gemeinsamen Mittelast 3 auf, der sich von dem Anschlußkontakt PAD2 nach oben hin erstreckt. Vom Mittelast 3 aus erstrecken sich waagerecht erste Interdigital-Mittelelektroden 4, und zwar auf der linken Seite des Mittelasts 3. Auf der rechten Seite des Mittelasts 3 erstrecken sich waagerecht zweite Interdigital-Mittelelektroden 5. In Figur 1 sind von den ersten Interdigital-Mittelelektroden 4 und von den zweiten Interdigital-Mittelelektroden 5 jeweils nur die untersten mit einer Bezugsziffer bezeichnet. Der besseren Übersicht halber sind die übrigen ersten und zweiten Interdigital-Mittelelektroden nicht mit Bezugsziffern versehen.

Vom Anschußkontakt PAD1 aus erstreckt sich ein erster Außenast 6 nach oben, und zwar parallel zum Mittelast 3. Dabei zweigen vom ersten Außenast 6 aus erste Interdigital-Außenelektroden 7 waagerecht in eine Richtung zum Mittelast 3 hin ab. Der erste Außenast 6, die ersten Interdigital-Außenelektroden 7, der Mittelast 3 und die ersten Interdigital-Mittelelektroden 4 bilden zusammen den Interdigitalelektrodenbereich ID1.

Vom Anschlußkontakt PAD3 aus erstreckt sich ein zweiter Außenast 8 in den oberen Bereich des Trägersubstrats 2, und zwar parallel zum Mittelast 3. Vom zweiten Außenast 8 aus erstrecken sich waagerecht zweite Interdigital-Außenelektroden 9 nach innen zum Mittelast 3. Die miteinander fingerartig verzahnenden zweiten Interdigital-Außenelektroden 9, die zweiten Interdigital-Mittelelektroden 5, der Mittelast 3 und der zweite Außenast 8 bilden zusammen den Interdigitalelektrodenbereich ID2.

Von dem Anschlußkontakt PAD1 aus erstreckt sich um den Interdigitalelektrodenbereich ID1 und um den Interdigitalelektrodenbereich ID2 herum ein Heizmäander H, dessen Leiterbahnbereich schlangenförmig ausgeführt ist, damit eine möglichst große Leiterbahnlänge erreicht wird.

Bei dem ersten Gassensor 1 ist nur eine Seite des keramische Trägersubstrats 2 mit aktiven Materialien beschichtet.

Die Anschlußkontakte PAD1 und PAD2 sind dafür bestimmt, mit einer Betriebsspannung beaufschlagt zu werden. Ein Großteil der zur Verfügung gestellten Energie der Betriebsspannung wird zur Erzeugung eines Stromflusses durch den Heizmäander H von PAD1 nach PAD2 entnommen. Durch diesen Heizstrom wird der erste Gassensor 1 auf einen Temperaturbereich aufgeheizt, in dem die gewünschten Gassensivitäten der im Bereich der beiden Interdigitalelektrodenbereich ID1 und ID2 abgeschiedenen sensitiven Halbleiterschichten vorliegen.

Die jeweiligen Materialien der auf den ersten und zweiten Interdigital-Mittelelektroden 4, 5 sowie auf den ersten und zweiten Interdigital-Außenelektroden 7, 9 abgeschiedenen Schichten sind so gewählt, daß eine Temperaturkompensation erreicht wird. Dazu wird im Interdigitalelektrodenbereich ID1 eine Schicht abgeschieden, deren Leitfähigkeit von Temperatur und Gasatmosphäre verändert wird. Hierfür kann beispielsweise Ga₂O₃ in reiner Form verwendet werden. Im Interdigitalelektrodenbereich ID2 wird eine Schicht abgeschieden, deren Leitfähigkeit zwar von der Temperatur aber nicht von der Gasatmosphäre abhängt. Hierfür kann Ga₂O₃ verwendet werden, das mit 10%_{At} ZrO₂ dotiert ist oder es kann mit AlVO₃ oberflächenmodifiziertes Ga₂O₃ verwendet werden.

Durch Verwendung des auf dem ersten Gassensor 2 verwirklichten Spannungsteilers kann der Temperatureinfluß eliminiert werden, wenn die Materialen der Interdigitalelektrodenbereiche ID1 und ID2 zumindest in dem angewendeten Temperaturfenster einen vergleichbaren Temperaturgang der elektrischen Leitfähigkeit aufweisen. Somit kann zwischen den Anschlußkontakten PAD3 und PAD2 ein Ausgangssignal abgetastet werden, das unabhängig von der Einhaltung einer exakt gleichen Arbeitstemperatur des ersten Gassensor 1 ist. Für den erfindungsgemäßen ersten Gassensor 1 ist damit keine Regulierung der Heizungsspannung notwendig. Es reicht aus, wenn ein an den Anschlußkontakten PAD1 und PAD2 anliegendes Versorgungssignal in einem definierten Fenster beispielsweise zwischen 7 und 10 V vorliegt. Für eine typische Realisierung wird eine räumliche Trennung der Sensorelemente der Interdigitalelektrodenbereich ID1 und ID2 von 100 um bis 300 um vorgesehen.

Figur 2 zeigt ein Ersatzschaltbild des ersten Gassensors 1 aus Figur 2.

Wie man in dieser Ansicht besonders gut sieht, sind die Anschlußkontakte PAD1 und PAD2 mit einer Heizspannung Uₑ beaufschlagt. Zwischen den Anschußkontakten PAD2 und PAD3 kann eine Ausgangsspannung Uₐ abgegriffen werden. Diese Ausgangsspannung repräsentiert die von dem gassensitiven Interdigitalelektrodenbereich ID1 detektierte Gaskonzentration und stellt ein aktives Ausgangssignal des ersten Gassensors 1 dar. Bei einer Anwendung, bei der der gassensitive Interdigitalelektrodenbereich ID1 aus Ga₂O₃ besteht, also wenn der Interdigitalelektrodenbereich ID1 auf die Anwesenheit von zu detektierenden Gasen mit einer Leitwertserhöhung reagiert, und wenn der Interdigitalelektrodenbereich ID1 als derjenige Teil des auf dem ersten Gassensor 1 gebildeten Spannungsteilers geschaltet wird, der an der positiven Klemme der Versorgungsspannung anliegt, wird eine Ausgangsspannung geliefert, die sich mit der Konzentration des zu detektierenden Gases erhöht. Eine Schwellwerterkennung einer Gaskonzentration kann durch Erreichen eines gewissen Schwellwertes der Ausgangsspannung Uₐ angezeigt werden.

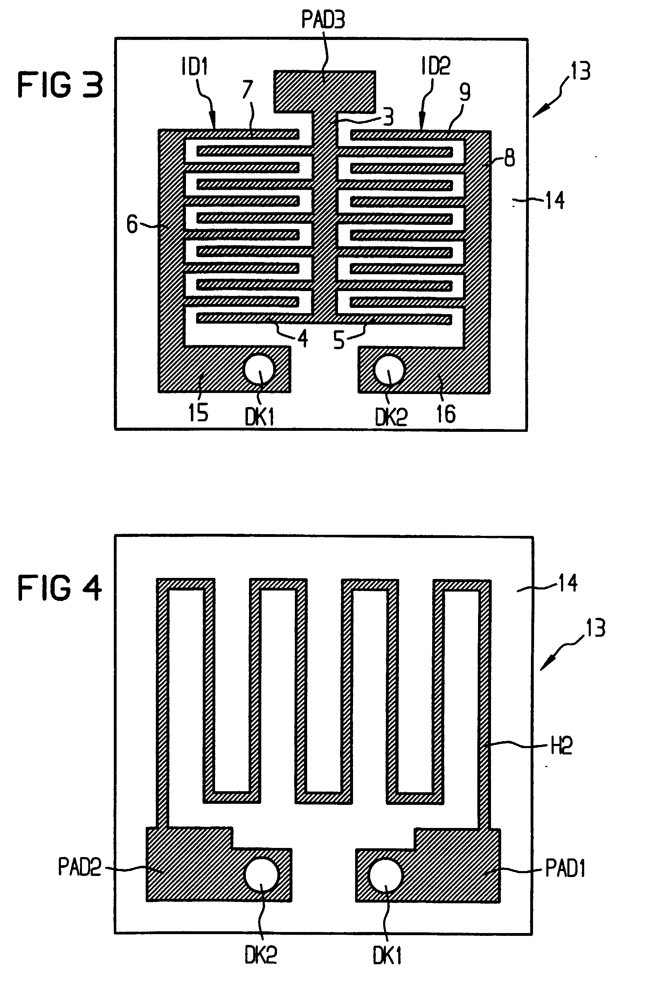

Figur 3 zeigt einen zweiten Gassensor 13 in der Draufsicht. Der zweite Gassensor 13 weist Interdigitalelektrodenbereiche ID1 und ID2 auf, die im wesentlichen den Interdigitalelektrodenbereichen ID1 und ID2 des ersten Gassensors 1 aus Figur 1 entsprechen. Gleichen Einzelteilen sind daher die selben Bezugsziffern gegeben.

Wie man in Figur 3 gut erkennen kann, ist der Mittelast 3 zum oberen Ende eines Trägersubstrats 14 geführt, wo er in einem rechteckigen Anschlußkontakt PAD3 mündet. Der erste Außenast 6 mündet an der unteren Kante des Trägersubstrats 14 in einem ersten Überleitungsbereich 15, der eine erste Durchkontaktierungsbohrung DK1 einfaßt. Der zweite Außenast 8 erstreckt sich ebenfalls in Richtung der Unterkante des Trägersubstrats 14 und mündet in einem zweiten Überleitungsbereich 16, der einen zweiten Durchkontaktierungsbereich DK2 einfaßt.

Figur 4 zeigt eine Ansicht des zweiten Gassensors 13 von unten.

Wie man in Figur 4 besonders gut sieht, ist gegenüberliegend von dem ersten Überleitungsbereich 15 ein Anschlußkontakt PAD1 vorgesehen, der die erste Durchkontaktierungsbohrung DK1 umfaßt. Ebenso ist genau gegenüberliegend von dem zweiten Überleitungsbereich 16 ein Anschlußkontakt PAD2 vorgesehen, der die zweite Durchkontakierungsbohrung DK2 umfaßt.

Die Durchkontaktierungsbohrungen DK1 und DK2 sind mit Lötpaste aufgefüllt, so daß sich eine leitende Verbindung zwischen dem ersten Überleitungsbereich 15 und dem Anschlußkontakt PAD1 sowie zwischen dem zweiten Überleitungsbereich 16 und dem Anschlußkontakt PAD2 ergibt.

Wie man in Figur 4 gut erkennen kann, erstreckt sich ausgehend vom Anschlußkontakt PAD2 ein Heizmäander H2, und zwar aus Leiterbahnstruktur, die in Schlangenlinien auf der Unterseite des Trägersubstrats 14 verläuft.

Das Ersatzschaltbild des zweiten Gassensors 13 entspricht demjenigen des ersten Gassensors 1. Dementsprechend entspricht auch die Funktion des zweiten Gassensors 13 derjenigen des ersten Gassensors 1.

Die Ausbildung des zweiten Gassensors 13 trägt einer Anforderung Rechnung, gemäß der ein Gassensor mit einer verminderten Chipfläche ausgebildet werden soll, da mit einer Reduzierung der Chipfläche die benötigte Heizleistung sinkt. Der zweite Gassensor 13 hat einen doppelseitigen Aufbau, bei dem sich auf einer Seite die Interdigitalelektrodenbereich ID1 und ID2 und auf der anderen Seite der Heizmäander H2 befinden.

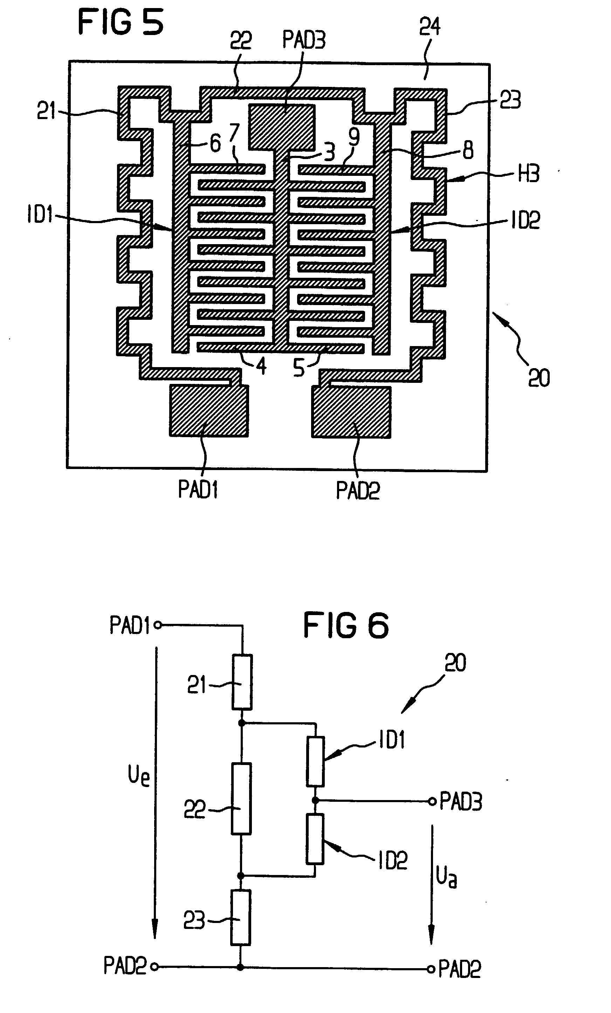

Figur 5 zeigt eine Draufsicht auf einen dritten Gassensor 20, der auf einem Trägersubstrat 24 aufgebaut ist. Der dritte Gassensor 20 weist einen ersten Interdigitalelektrodenbereich ID1 sowie einen zweiten Interdigitalelektrodenbereich ID2 auf, die im wesentlichen den Interdigitalelektrodenbereichen ID1 und ID2 aus den Figuren 1 und 3 entsprechen. Gleichen Bestandteilen sind daher dieselben Bezugsziffern gegeben.

Im Unterschied zum ersten Gassensor 1 und zum zweiten Gassensor 13 ist ein Heizmäander H3 vorgesehen, der einen ersten Heizwiderstandsbereich 21 aufweist, der sich als schlangenlinienförmiger Leiterbahnbereich zwischen dem Anschlußkontakt PAD1 und einem oberen Ende des ersten Außenastes 6 erstreckt. Der Heizmäander H3 hat noch einen zweiten Heizwiderstandsbereich 22, der sich zwischen einem oberen Bereich des ersten Außenastes 6 und einem oberen Bereich des zweiten Außenastes 8 erstreckt sowie einen dritten Heizwiderstandsbereich 23, der sich zwischen einem oberen Bereich des zweiten Außenastes 8 und dem Anschlußkontakt PAD2 erstreckt.

Die Gestaltung des dritten Gassensors 20 trägt einer Besonderheit mancher Sensorschichten zum Detekieren von Gasen Rechnung. Für manche Sensorschichten bestehen nämlich enge Obergrenzen der verwendbaren elektrischen Feldstärken für die Messung des elektrischen Widerstandes eines Interdigitalelektrodenbereichs. So gibt es Interdigitalelektrodenbereiche, bei denen die verwendete Meßspannung eine Spannung von ca. 1 V nicht überschreiten soll.

Figur 6 zeigt das Ersatzschaltbild des dritten Gassensors 20 aus Figur 5, aus dem die Besonderheit des Gassensors 20 deutlich wird.

Wie man in dieser Ansicht besonders gut sieht, werden die Interdigitalelektrodenbereiche ID1 und ID2 an einem aus dem Heizwiderstandsbereichen 21, 22 und 23 gebildeten Spannungsteiler betrieben. Dadurch liegt an den Interdigitalelektrodenbereichen ID1 und ID2 eine verminderte Spannung an. Zwischen den Anschlußkontakten PAD3 und PAD2 wird eine Ausgangsspannung Uₐ geliefert, die sich mit der Konzentration des zu detektierenden Gases erhöht.

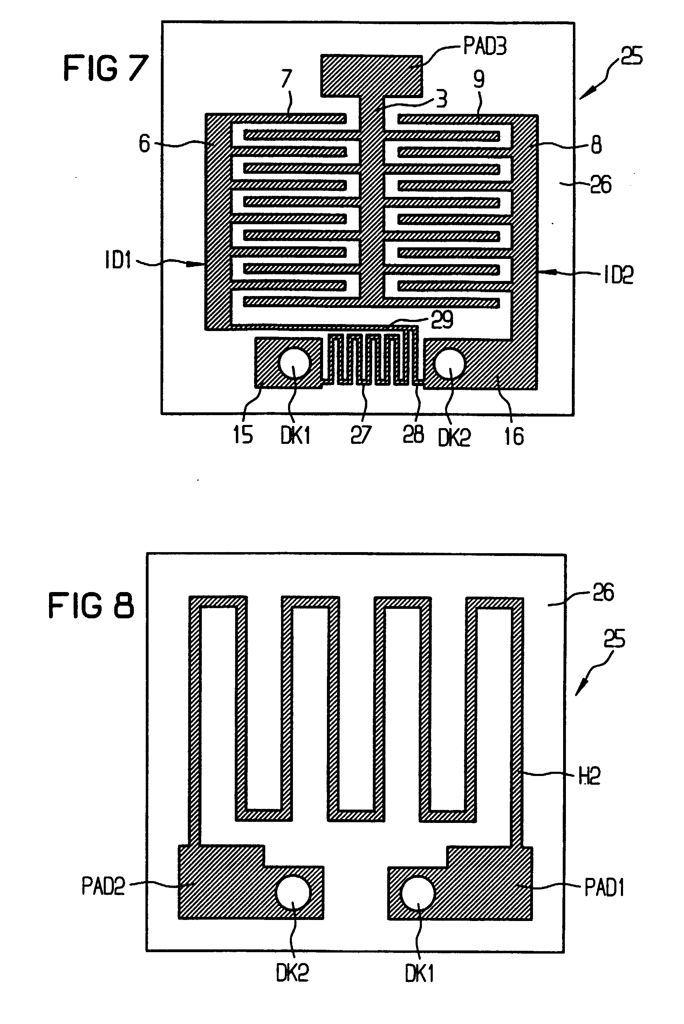

Figur 7 und Figur 8 zeigen eine Draufsicht auf einen vierten Gassensor 25. Der Gassensor 25 weist ein Trägersubstrat 26 auf, auf dem Leiterbahnbereiche vorgesehen sind, die in wesentlichen Bestandteilen mit denjenigen des Gassensors 13 aus den Figuren 3 und 4 übereinstimmen. Daher sind gleichen Bestandteilen dieselben Bezugsziffern gegeben. Im Unterschied zum zweiten Gassensor 13 weist der vierte Gassensor 25 keine direkte Verbindung zwischen dem ersten Überleitungsbereich 15 und dem ersten Außenast 6 auf. Vielmehr erstrecken sich zwischen dem ersten Überleitungsbereich 15 und dem zweiten Überleitungsbereich 16 ein erstes Leiterbahnsegment 27, das in Reihe mit einem zweiten Leiterbahnsegment 28 geschaltet ist. Dabei ist ein Verbindungspunkt zwischen erstem Leiterbahnsegment 27 und zweiten Leiterbahnsegment 28 über eine Verbindungsleitung 29 mit einem unteren Ende des ersten Außenastes 6 verbunden.

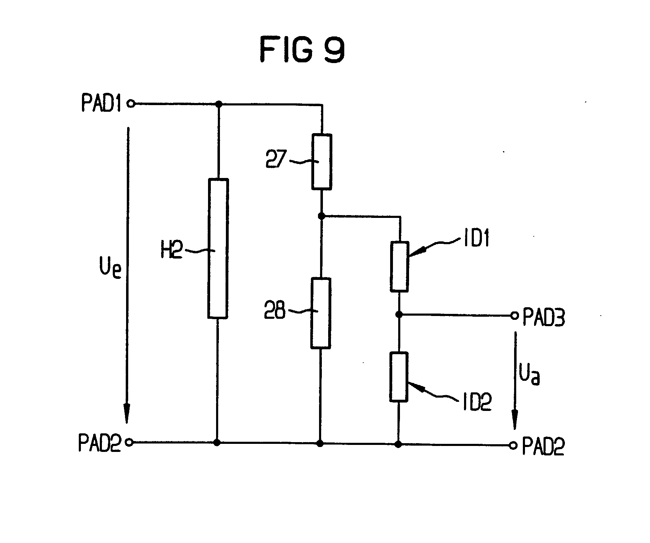

Figur 9 zeigt ein Ersatzschaltbild einer mit dem vierten Gassensor 25 gebildeten Meßschaltung.

Wie man in Figur 9 deutlich sieht, bilden das erste Leiterbahnsegment 27 und das zweite Leiterbahnsegment 28 einen Spannungsteiler, an dem die Interdigitalelektrodenbereiche ID1 und ID2 betrieben werden. Der Heizmäander H2 ist parallel zu der Reihenschaltung aus dem ersten Leiterbahnsegment 27 und dem zweiten Leiterbahnsegment 28 geschaltet. Die in Reihe geschalteten Interdigitalelektrodenbereiche ID1 und ID2 sind parallel zum zweiten Leiterbahnsegment 28 geschaltet. Die Anschlußkontakte PAD1 und PAD2 werden mit einer Heizspannung beaufschlagt. Bei einer Veränderung der Gaskonzentration im Bereich der Interdigitalelektrodenbereiche ID1 und ID2 kann eine entsprechend veränderte Ausgangsspannung zwischen den Anschlußkontakten PAD3 und PAD2 abgegriffen werden.

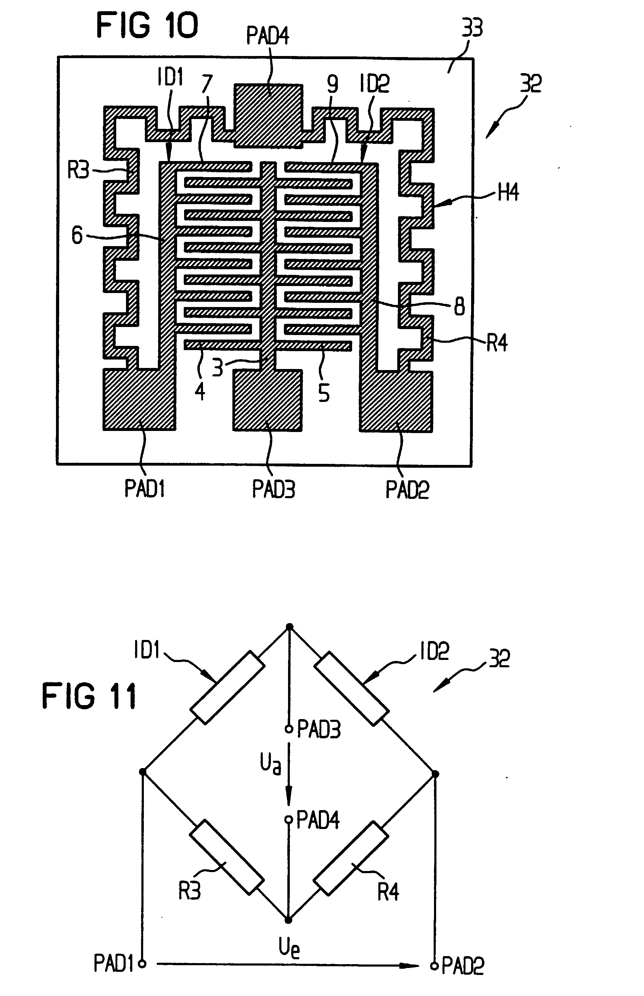

Figur 10 zeigt einen fünften Gassensor 32 in der Draufsicht. Der fünfte Gassensor 32 weist ein Trägersubstrat 33 auf. Der fünfte Gassensor 32 entspricht im wesentlichen dem ersten Gassensor 1 aus Figur 1. Gleiche Bestandteile haben daher dieselben Bezugsziffern.

Im Gegensatz zum ersten Gassensor 1 weist der fünfte Gassensor 32 einen Heizmäander H4 auf, der sich wie der Heizmäander H beim ersten Gassensor 1 zwischen dem Anschlußkontakt PAD1 und dem Anschlußkontakt PAD2 erstreckt. Der Heizmäander H4 wird von einem ersten Widerstandsbereich R3, der sich zwischen dem Anschlußkontakt PAD1 und einem Anschlußkontakt PAD4 schlangenlinienförmig erstreckt, und von einem zweiten Widerstandsbereich R4 gebildet, der sich zwischen dem Anschlußkontakt PAD4 und dem Anschlußkontakt PAD2 erstreckt. Somit sind der erste Widerstandsbereich R3 und der zweite Widerstandsbereich R4 in Reihe geschaltet.

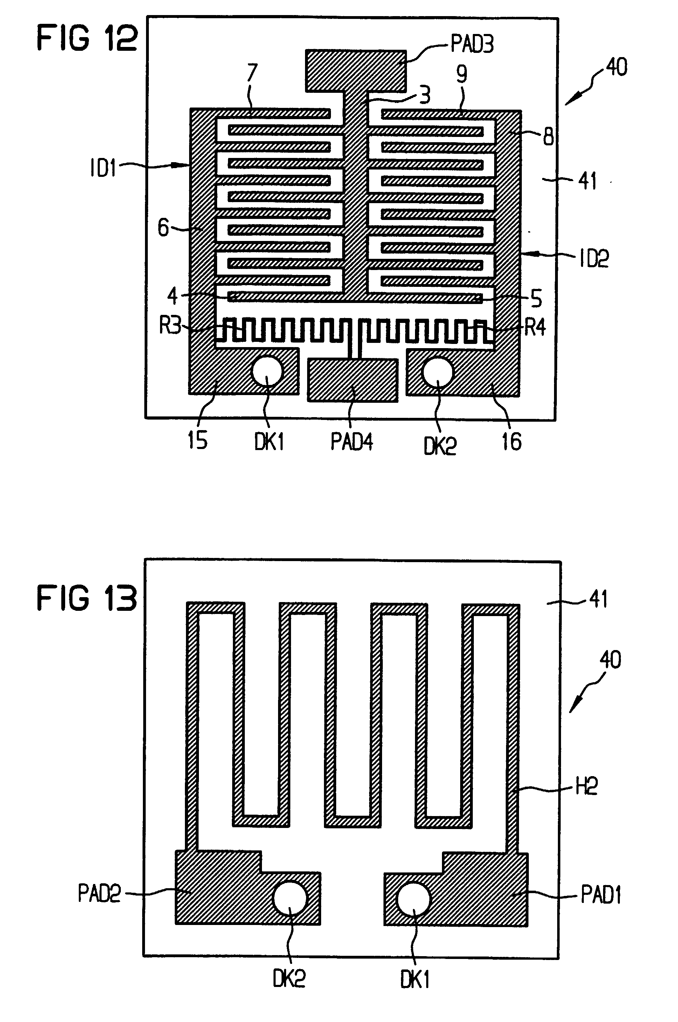

Figur 11 zeigt ein Ersatzschaltbild einer weiteren erfindungsgemäßen Meßschaltung mit dem fünften Gassensor 32.

Wie man in Figur 11 besonders gut sieht, sind der erste Widerstandsbereich R3 und der zweite Widerstandsbereich R4 so in Reihe geschaltet, daß diese als Spannungsteiler einen Zweig einer Wheatstone-Meßbrücke bilden. Der andere Zweig der Wheatstone-Meßbrücke wird von den in Reihe geschalteten Interdigitalelektrodenbereichen ID1 und ID2 gebildet. Wenn die Anschlußkontakte PAD1 und PAD2 mit einer Heizspannung Uₑ versorgt werden, dann kann bei einer Veränderung der Gaskonzentration im Bereich der Interdigitalelektrodenbereiche ID1 und ID2 eine Spannungsänderung der Ausgangsspannung Uₐ zwischen den Anschlußkontakten PAD3 und PAD4 beobachtet werden.

Bei der Meßschaltung aus Figur 11 wird eine Ausgangsspannung bereitgestellt, die bei geeigneter Auslegung der Leiterbahnbereiche auf dem Trägersubstrat 33 bei Abwesenheit eines zu detektierenden Gases 0V beträgt. Bei Anwesenheit des zu detektierenden Gases ergibt sich eine Spannung, die verschieden von 0V ist.

Die Figuren 12 und 13 zeigen einen sechsten Gassensor 40, der ein Trägersubstrat 41 aufweist.

Der sechste Gassensor 40 entspricht im wesentlichen dem zweiten Gassensor 13 aus den Figuren 3 und 4. Gleichen Bestandteilen sind daher gleiche Bezugsziffern gegeben.

Im Unterschied zum zweiten Gassensor 13 aus den Figuren 3 und 4 weist der sechste Gassensor 40 auf seiner Oberseite zwischen dem ersten Überleitungsbereich 15 und dem zweiten Überleitungsbereich 16 einen Anschlußkontakt PAD4 auf. Weiterhin ist zwischen einem unteren Teilbereich des ersten Außenastes 6 und dem Anschlußkontakt PAD4 ein erster Widerstandsbereich R3 vorgesehen, der als Leiterbahn mit mäanderförmigem Verlauf ausgebildet ist. Zwischen einem unteren Bereich des zweiten Außenastes 8 und dem Anschlußkontakt PAD4 ist ein zweiter Widerstandsbereich R4 vorgesehen, der ebenfalls einen mäanderförmigen Verlauf aufweist.

Aufgrund der besonderen Ausbildung des sechsten Gassensors 40 kann dieser wie der fünfte Gassensor 32 in einer Meßschaltung gemäß Figur 11 eingesetzt werden. Dabei wird eine Heizspannung an die Anschlüsse PAD1 und PAD2 angelegt, die besonders gut in Figur 13 dargestellt sind. Bei Anwesenheit eines zu detektierenden Gases bei den Interdigitalelektrodenbereichen ID1 und ID2 liegt zwischen den Anschlüssen PAD3 und PAD4 eine Spannung vor, die verschieden von 0V ist. Falls kein zu detektierendes Gas vorliegt, dann ist der Potentialunterschied zwischen den Anschlußkontakten PAD3 und PAD4 gleich 0V.

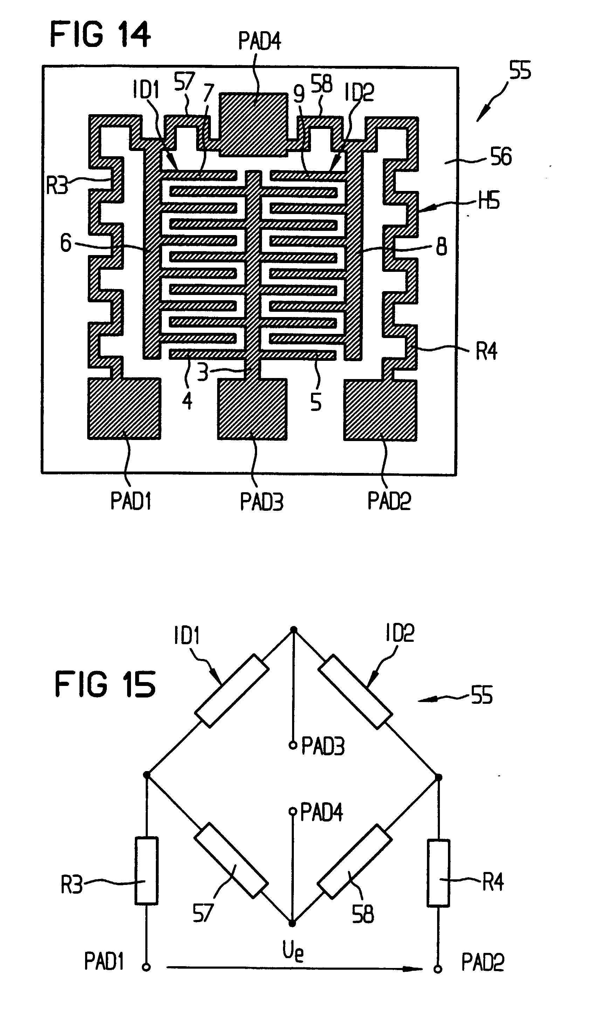

Figur 14 zeigt einen siebten Gassensor 55 in der Draufsicht. Der siebte Gassensor 55 weist ein Trägersubstrat 56 auf.

Der siebte Gassensor 55 entspricht in großen Teilen dem Gassensor 20 aus Figur 5. Gleichen Bestandteilen sind daher dieselben Bezugsziffern gegeben.

So weist der siebte Gassensor 55 zwei Interdigitalelektrodenbereiche ID1 sowie ID2 auf, die einen gemeinsamen Mittelast 3 und einen ersten Außenast 6 sowie einen zweiten Außenast 8 aufweisen. Von den Außenästen 6 bzw. 8 erstrecken sich erste Interdigital-Außenelektroden 7 sowie zweite Interdigital-Außenelektroden 9 nach innen in die Richtung zum Mittelast 3 hin. Vom Mittelast 3 aus erstrecken sich erste Interdigital-Mittelelektroden 4 in Richtung zum ersten Außenast 6 hin sowie zweite Interdigital-Mittelelektroden 5 in Richtung zum zweiten Außenast 8 hin. Die Interdigital-Mittelelektroden 4, 5 und die Interdigital-Außenelektroden 7, 9 greifen fingerartig ineinander.

Der Mittelast 3 ist in Richtung zu einer Unterkante des Trägersubstrats 56 mit einem Anschlußkontakt PAD3 verbunden. Links und rechts vom Anschlußkontakt PAD3 sind Anschlußkontakte PAD1 sowie PAD2 vorgesehen. Zwischen den Anschlußkontakten PAD1 und PAD2 erstreckt sich ein Heizmäander H5, der einen mehrteiligen Leiterbahnbereich aufweist. Der Heizmäander H5 gliedert sich ausgehend vom Anschlußkontakt PAD1 in einen ersten Widerstandsbereich R3, sowie ausgehend vom Anschlußkontakt PAD2 in einen zweiten Widerstandsbereich R4. Am Ende des Widerstandsbereichs R3 ist der erste Außenast 6 mit dem Heizmäander H5 verbunden. Auf gleiche Weise ist am Ende des zweiten Widerstandsbereichs R4 der zweite Außenast 8 mit dem Heizmäander H5 verbunden. Zwischen den Verbindungsstellen von erstem Außenast 6 und Heizmäander H5 und dem zweiten Außenast 8 und dem Heizmäander H5 ist eine Anschlußkontakt PAD4 vorgesehen. Zwischen dem Anschlußkontakt PAD4 und dem ersten Außenast 6 erstreckt sich ein dritter Widerstandsbereich 57 und zwischen dem Anschlußkontakt PAD4 und dem zweiten Außenast 8 erstreckt sich ein vierter Widerstandsbereich 58.

Figur 15 zeigt ein Ersatzschaltbild einer erfindungsgemäßen Meßschaltung, die unter Verwendung des siebten Gassensors 55 aufgebaut ist.

Wie man in Figur 15 besonders gut sieht, bilden die Interdigitalelektrodenbereiche ID1 und ID2 hintereinander geschaltet einen Zweig einer Wheatstone-Meßbrücke. Der andere Zweig der Wheatstone-Meßbrücke wird von dem dritten Widerstandsbereich 57 und von dem vierten Widerstandsbereich 58 gebildet, die innerhalb des Heizmäanders H5 hintereinander geschaltet sind. Zwischen den Anschlußkontakten PAD3 und PAD4 kann das Brückenpotential der Wheatstone-Brücke abgegriffen werden. Die Versorgungsspannung Uₑ wird jeweils über die Vorwiderstände R3 und R4 den Verzweigungspunkten der Wheatstone-Brücke zugeführt, falls die Anschlußkontakte PAD1 und PAD2 mit der Versorgungsspannung Uₑ beaufschlagt werden.

Mit der erfindungsgemäßen Meßschaltung mit dem siebten Gassensor 55 ist gewährleistet, über den Heizmäander H5 das Trägersubstrat 56 auf Betriebstemperatur aufzuheizen und dabei gleichzeitig mit reduzierter Spannung an den Interdigitalelektrodenbereichen ID1 und ID2 zu messen.

In einem hier nicht gezeigten Ausführungsbeispiel, das im wesentlichen dem siebten Gassensor aus Figur 14 gleicht, verläuft der Heizmäander H5 auf der Unterseite des Trägersubstrats 56. Der Heizmäander H5 wird dann über Durchkontaktierungen bei den Anschlußkontakten PAD1 und PAD2 mit der Betriebsspannung Uₑ beaufschlagt. Der linke Außenast 6 und der rechte Außenast 8 werden über Durchkontaktierungen mit entsprechenden Abschnitten des Heizmäanders H5 verbunden, so daß die Versorgung der Interdigitalelektrodenbereiche ID1 und ID2 mit reduzierter Meßspannung erfolgt, und zwar auf analoge Weise zum in Figur 14 gezeigten siebten Gassensor 55.

## Patentansprüche

1. Halbleitergassensor, mit einem Trägersubstrat (33; 41; 56), auf dem ein als Leiterbahnbereich ausgebildeter Interdigitalelektrodenbereich (ID1, ID2) mit wenigstens zwei Interdigitalelektroden (4, 7; 5, 9) vorgesehen ist, dadurch gekennzeichnet, daß
wenigstens ein als Leiterbahnbereich (R3, R4; 57, 58) ausgebildeter Meßwiderstandsbereich vorgesehen ist, der mit dem Interdigitalelektrodenbereich (ID1, ID2) in Verbindung steht.

2. Halbleitergassensor nach Anspruch 1,
dadurch gekennzeichnet, daß
mehrere Meßwiderstandsbereiche (R3, R4; 57, 58) vorgesehen sind, die mit dem Interdigitalelektrodenbereich bzw. mit den Interdigitalelektrodenbereichen (ID1, ID2) zu einer Brückenmeßschaltung verbunden sind.

3. Halbleitergassensor nach Anspruch 2,
dadurch gekennzeichnet, daß
drei Meßwiderstandsbereiche und ein Interdigitalelektrodenbereich bzw. zwei Meßwiderstandsbereiche (R3, R4; 57, 58) und zwei Interdigitalelektrodenbereiche vorgesehen sind, wobei
die Meßwiderstandsbereiche (R3, R4; 57, 58) und der Interdigitalelektrodenbereich bzw. die Interdigitalelektrodenbereiche (ID1, ID2) zu einer Wheatstone-Brückenmeßschaltung verbunden sind, wobei ein erster und ein zweiter Meßwiderstandsbereich (R3, R4; 57, 58) einen Ast der Wheatstone-Brückenmeßschaltung bilden und wobei ein dritter Meßwiderstandsbereich und der Interdigitalelektrodenbereich bzw. die beiden Interdigitalelektrodenbereiche (ID1, ID2) den zweiten Ast der Wheatstone-Brückenmeßschaltung bilden.

4. Halbleitergassensor nach einem der vorhergehenden Ansprüche,
dadurch gekennzeichnet, daß
wenigstens ein Meßwiderstandsbereich (R3, R4; 57, 58) als Heizwiderstandsbereich ausgebildet ist.

5. Halbleitergassensor nach Anspruch 1,
dadurch gekennzeichnet, daß
ein Meßwiderstand vorgesehen ist, der in Reihe mit dem der mit dem Interdigitalelektrodenbereich geschaltet ist bzw. der parallel zu dem Interdigitalelektrodenbereich geschaltet ist.

6. Halbleitergassensor, mit einem Trägersubstrat (24, 26, 56), auf dem wenigstens ein als Leiterbahnbereich ausgebildeter Interdigitalelektrodenbereich (ID1, ID2) mit wenigstens zwei Interdigitalelektroden (4, 7; 5, 9) und wenigstens zwei jeweils als Leiterbahnbereich ausgebildete und in Reihe geschaltete Heizwiderstandsbereiche (21, 22, 23; 27, 28; 57, 58, R3, R4) vorgesehen ist,
wobei der Interdigitalelektrodenbereich (ID1, ID2) durch einen im Bereich des Trägersubstrats vorgesehenen Leiterbahnabschnitt (29) und/oder durch eine Durchkontaktierung mit dem Verbindungspunkt der Heizwiderstandsbereiche (21, 22, 23; 27, 28; 57, 58, R3, R4) verbunden ist.

7. Halbleitergassensor nach Anspruch 6,
dadurch gekennzeichnet, daß
zwei jeweils als Leiterbahnbereich ausgebildete Interdigitalelektrodenbereiche (ID1, ID2) mit zwei Interdigitalelektroden und wenigstens zwei jeweils als Leiterbahnbereich ausgebildete und in Reihe geschaltete Heizwiderstandsbereiche (21, 22, 23; 27, 28; 57, 58, R3, R4) vorgesehen sind,
wobei je ein Interdigitalelektrodenbereich (ID1, ID2) durch einen im Bereich des Trägersubstrats vorgesehenen Leiterbahnabschnitt (29) und/oder durch eine Durchkontaktierung mit einem Verbindungspunkt von je zwei Heizwiderstandsbereichen (21, 22, 23; 27, 28; 57, 58, R3, R4) verbunden ist.

8. Halbleitergassensor, mit einem Trägersubstrat (2; 24; 33; 56), auf dem wenigstens ein als Leiterbahnbereich ausgebildeter Interdigitalelektrodenbereich (ID1, ID2) mit zwei Interdigitalelektroden (4, 7; 5, 9) und wenigstens ein als Leiterbahnbereich ausgebildeter Heizwiderstandsbereich (H; H3; H4; H5) vorgesehen ist,
dadurch gekennzeichnet, daß
der Interdigitalelektrodenbereich bzw. die Interdigitalelektrodenbereiche (ID1, ID2) und wenigstens ein Heizwiderstandsbereich (H; H3; H4; H5) auf der selben Seite des Trägersubstrats (2; 24; 33; 56) angeordnet sind.

9. Halbleitergassensor, mit einem Trägersubstrat (2; 14; 24; 33; 41; 56), auf dem wenigstens zwei als Leiterbahnbereiche ausgebildete Interdigitalelektrodenbereiche (ID1, ID2) mit jeweils zwei Interdigitalelektroden (4, 7; 5, 9) vorgesehen sind, wobei wenigstens zwei Interdigitalelektrodenbereiche (ID1, ID2) auf der selben Seite des Trägersubstrats angeordnet sind.

10. Meßschaltung mit einem Halbleitergassensor,
dadurch gekennzeichnet, daß
ein Halbleitergassensor (1; 13; 20; 32; 40; 55) nach einem der vorhergehenden Ansprüche vorgesehen ist.
